# FASCICULE DE BREVET EUROPEEN

(11) **EP 1 033 673 B1**
(45) Date de publication et mention de la délivrance du brevet: **06.04.2005**
(21) Numéro de dépôt: 00400476.8
(22) Date de dépôt: 22.02.2000
(51) Int. Cl.: G06K 19/07, G06K 7/00

(54) **Dispositif d'aide à l'identification de sous-ensembles d'un équipement, notamment d'aéronef**
Einrichtung für die Identifikationshilfe von Geräteteilen einer Ausrüstung, insbesondere eines Flugzeugs
Device for helping to identify the sub-assemblies of equipment, particularly an aircraft

(30) Priorité: 02.03.1999 FR 9902546
(43) Date de publication de la demande: 06.09.2000
(73) Titulaire: AIRBUS France, 31060 Toulouse (FR)
(72) Inventeur: Terme, Jean-Louis, 31830 Plaisance du Touch (FR)
(74) Mandataire: Bonnetat, Christian

(56) Documents cités:
- GB-A- 2 284 728
- GB-A- 2 286 948
- US-A- 5 214 409
- US-A- 5 469 363
- US-A- 5 610 596

## Description

La présente invention concerne un dispositif d'aide à l'identification de sous-ensembles d'un équipement et un système pour réaliser une identification à l'aide d'un tel dispositif.

Plus précisément, la présente invention s'applique à un équipement qui comporte une pluralité de sous-ensembles, en particulier matériels et logiciels, et qui est muni d'une unité de stockage stockant, entre autres, les références desdits sous-ensembles et susceptible d'être chargée à distance.

Bien que non exclusivement, l'invention s'applique plus particulièrement à un équipement d'un aéronef, notamment d'un avion de transport civil.

On notera que, lorsqu'un tel équipement est installé sur un aéronef et qu'il est alimenté en courant électrique, l'identification des sous-ensembles dudit équipement est généralement possible au moyen de terminaux de maintenance appropriés embarqués sur l'aéronef.

Toutefois, une telle identification n'est plus possible, notamment lorsque :
- l'équipement n'est pas alimenté en électricité sur l'aéronef ;
- l'aéronef ne comporte pas de tels terminaux de maintenance ; ou
- l'équipement n'est pas monté sur un aéronef, mais se trouve par exemple sur une étagère dans une pièce de stockage d'équipements.

On notera que la dernière situation est la plus défavorable en ce qui concerne l'identification, puisque dans ce cas, en général :
- l'équipement n'est pas alimenté en électricité ;
- il existe un nombre élevé d'équipements différents ; et
- les intervenants sont souvent peu qualifiés pour des interventions électriques ou logicielles.

Par ailleurs, les moyens usuels pour réaliser des identifications, notamment des roues codeuses et des afficheurs, ne sont pas applicables dans le cas présent.

En effet :
- en ce qui concerne les roues codeuses connues, il existe notamment un problème de place sur la face visible de l'équipement et un problème de maîtrise de l'information ; et
- en ce qui concerne les afficheurs connus, par exemple du type électroluminescent, il existe en particulier des problèmes de place, de coût élevé, de fiabilité et de consommation importante d'électricité.

En outre, par le document US-5 469 363, on connaît un système de contrôle qui comporte un moyen électronique (étiquette) associé à un équipement d'aéronef. Ce moyen électronique comprend une mémoire EEPROM dans laquelle sont stockées des données, relatives en particulier à des évènements successifs. Ces données peuvent être transmises à un ordinateur, via une unité d'interface d'un interrogateur. Ledit moyen électronique ne comporte aucune source interne d'alimentation électrique. Il est alimenté de l'extérieur, par l'intermédiaire d'un circuit de couplage inductif.

De plus, par le document GB-2 286 948, on connaît un moyen d'identification électronique qui est incorporé dans un équipement électronique, tel qu'un ordinateur personnel ou un téléphone portable. Ce moyen d'identification comporte, dans une mémoire EPPROM, un code d'identification qui est modifiable et qui peut être lu par un lecteur externe à l'équipement. A cet effet, ledit lecteur transmet du courant électrique audit moyen d'identification, par l'intermédiaire d'un couplage inductif.

Ce moyen d'identification connu permet uniquement d'identifier ledit équipement. Il ne permet pas d'identifier simultanément une pluralité de sous-ensembles dudit équipement.

La présente invention a pour objet de remédier aux inconvénients précités. Elle concerne un dispositif simple, efficace et de coût très réduit, qui permet de réaliser une aide à l'identification de sous-ensembles d'un équipement, notamment d'équipements d'un aéronef.

A cet effet, selon l'invention, ledit dispositif d'aide à l'identification pour un équipement, l'équipement étant muni d'une unité de stockage stockant des références et susceptible d'être chargée à distance, ledit dispositif comportant :
- une mémoire d'identification reliée à ladite unité de stockage et enregistrant lesdites références, stockées dans ladite unité de stockage ;
- un moyen d'alimentation électrique externe de ladite mémoire d'identification ; et
- un moyen de connexion relié à ladite mémoire d'identification, et auquel peut être connecté un lecteur susceptible de lire et restituer les références enregistrées dans ladite mémoire d'identification,
est remarquable en ce que le dispositif est formé de manière à identifier des sous-ensembles dudit équipement, en ce que lesdites références concernent lesdits sous-ensembles, et en ce que le dispositif comporte de plus un moyen d'isolation destiné :
- d'une part, à isoler électriquement ladite mémoire d'identification desdits sous-ensembles et de ladite unité de stockage ; et
- d'autre part, à isoler informatiquement ladite mémoire d'identification desdits sous-ensembles et de ladite unité de stockage.

Ainsi, grâce à l'invention, on peut identifier simultanément une pluralité de sous-ensembles de l'équipement. Cette identification est réalisée de façon :
- simple, par la simple connexion d'un lecteur ; et
- peu coûteuse, en raison du coût réduit des composants dudit dispositif.

De plus, la présente invention permet une parfaite maîtrise de l'information, notamment par :
- la limitation au strict minimum de la duplication des informations (références des sous-ensembles) entre l'unité de stockage et la mémoire d'identification ;
- la garantie de la cohérence des informations lorsqu'elles sont dupliquées ; et
- la garantie de la mise à jour automatique des informations lors de tout nouveau chargement à distance.

On notera en outre que :
- grâce à l'isolation électrique, on alimente uniquement la partie minimale du dispositif, nécessaire pour lire les informations de la mémoire d'identification ; et que
- grâce à l'isolation informatique, cn empêche toute modification, volontaire ou non, du reste de l'équipement par l'utilisation de la liaison vers la mémoire d'identification.

De façon avantageuse, ledit moyen d'isolation est un relais qui est, de préférence, commandé par une source électrique dudit équipement.

Par ailleurs, avantageusement, ledit moyen d'alimentation électrique est une liaison électrique susceptible d'être connectée à une source électrique, externe à l'équipement et indépendante dudit dispositif.

Selon l'invention, la liaison entre l'unité de stockage et la mémoire d'identification est destinée à transmettre avantageusement :
- soit des signaux de type série, qui sont créés au moyen d'un convertisseur série/parallèle connu ;
- soit des signaux de type série, qui sont créés au moyen d'un traitement logiciel connu et interne à l'unité de stockage.

On notera en outre que ledit moyen de connexion peut être réalisé de différentes manières.

En effet, dans un premier mode de réalisation préféré et particulièrement avantageux, il comporte au moins une zone de contact susceptibie d'être mise au contact d'au moins une zone coopérante du lecteur, tandis que dans un second mode de réalisation, il comporte un émetteur d'ondes électromagnétiques susceptible de coopérer avec un capteur agencé sur le lecteur.

La présente invention concerne également un système pour identifier les sous-ensembles d'un tel équipement.

Selon l'invention, ledit système est remarquable en ce qu'il comporte :
- un dispositif d'aide à l'identification, selon celui précité ; et
- un lecteur susceptible d'être connecté au moyen de connexion dudit dispositif d'aide à l'identification, de lire alors les références enregistrées dans la mémoire d'identification dudit dispositif et de les restituer.

Ainsi, grâce à l'invention, on peut utiliser un seul lecteur pour identifier une pluralité d'équipements munis chacun d'un dispositif d'aide à l'identification conforme à l'invention. Par conséquent, comme ce lecteur est l'élément le plus coûteux dudit système, ceci permet de réduire considérablement le coût de ce dernier.

De façon avantageuse, la source électrique destinée à alimenter la mémoire d'identification est incorporée dans le lecteur, ce qui permet de réduire considérablement la consommation électrique destinée à la mise en oeuvre de la présente invention, puisque la mémoire d'identification est uniquement alimentée lorsque l'on connecte le lecteur en vue de l'identification des sous-ensembles.

De préférence, ledit lecteur est susceptible de mémoriser les références lues et de les restituer ultérieurement, par exemple en connectant ledit lecteur à un poste de traitement destiné à réaliser divers traitements, comme par exemple la gestion de stocks d'équipements, ...

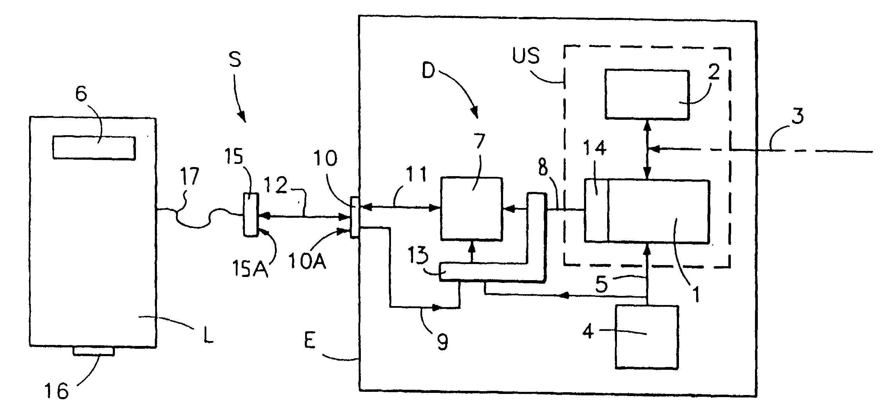

L'unique figure du dessin annexé fera bien comprendre comment l'invention peut être réalisée. Sur cette figure, on a représenté le schéma synoptique d'un système d'identification conforme à l'invention.

Le système S conforme à l'invention et représenté schématiquement sur la figure est destiné à l'identification de sous-ensembles non représentés d'un équipement E qui comporte une pluralité de sous-ensembles et qui est muni d'une unité de stockage US stockant des références desdits sous-ensembles.

Ledit équipement E peut notamment être un équipement d'aéronef que l'on peut remplacer sans précaution particulière, lors d'une escale par exemple, ou un module indépendant d'un tel équipement d'aéronef.

De façon connue, ladite unité de stockage US agencée sur l'équipement E :
- comporte un microprocesseur 1 et une mémoire 2 non volatile reliée audit microprocesseur 1 ;
- peut être chargée à distance, comme illustré par une liaison 3 en traits mixtes, notamment des références desdits sous-ensembles ; et
- est susceptible d'être alimentée par une source électrique 4, par l'intermédiaire d'une liaison 5.

On remarquera de plus que :
- généralement, un tel équipement E d'aéronef comporte près d'une dizaine de sous-ensembles différents ; et
- chaque référence est identifiée par près d'une dizaine de caractères, ce qui entraîne un nombre élevé de caractères par équipement à consulter lors d'une identification.

Aussi, pour permettre une identification facile, rapide et de coût réduit desdits sous-ensembles, c'est-à-dire une lecture des références de ces derniers, notamment lorsque l'équipement E n'est pas alimenté en électricité, le système S comporte selon l'invention :
- un dispositif D agencé sur l'équipement E et précisé ci-dessous ; et
- un lecteur L susceptible d'être connecté audit dispositif D de sorte que l'on puisse lire alors sur un écran d'affichage 6 dudit lecteur L les références desdits sous-ensembles.

A cet effet, ledit dispositif D comporte selon l'invention :
- une mémoire d'identification 7 reliée au microprocesseur 1 de ladite unité de stockage US et enregistrant automatiquement les références desdits sous-ensembles, stockées dans ladite unité de stockage US, et notamment celles stockées lors de tout chargement à distance ;
- un moyen 9 d'alimentation électrique externe de ladite mémoire d'identification 7 ; et
- un moyen de connexion 10 relié à ladite mémoire d'identification 7 par une liaison 11 à double sens, et auquel peut être connecté, comme illustré par une liaison 12, ledit lecteur L qui est susceptible de lire et restituer les références enregistrées dans ladite mémoire d'identification 7.

Ledit moyen 9 d'alimentation électrique est une simple liaison électrique qui est reliée, lors de la connexion du lecteur L sur le dispositif D, à une source d'alimentation électrique, par exemple une pile électrique, incorporée dans ledit lecteur L.

Ainsi, seule la mémoire d'identification 7 est alimentée électriquement par l'extérieur lors des identifications, ce qui nécessite une consommation électrique extrêmement faible pour la mise en oeuvre de l'invention.

Ledit moyen 9 est isolé électriquement par un moyen d'isolation 13, de préférence un relais commandé par la source électrique 4, qui réalise :
- d'une part, une isolation électrique de l'intérieur de l'équipement E vers l'extérieur, pour limiter l'alimentation aux seuls éléments internes nécessaires à la mise en oeuvre de l'invention, c'est-à-dire à la mémoire d'identification 7 et à l'électronique associée ; et
- d'autre part, une isolation informatique de la mémoire d'identification 7 vers le reste de l'équipement, en coupant la liaison 8 entre ladite mémoire d'identification 7 et l'unité de stockage US.

Selon l'invention, la liaison 8 entre la mémoire d'identification 7 et l'unité de stockage US est réalisée à l'aide d'un bus série de communication.

De préférence, on utilise à cet effet un bus connu sous le nom de bus "I²C" ("Inter Integrated Circuits") qui, de façon connue, n'utilise que trois fils et permet à deux équipements quelconques d'échanger des données avec un débit pouvant aller jusqu'à 100 kilobits par seconde. Une procédure de synchronisation automatique permet de plus le dialogue entre abonnés ne travaillant pas à la même vitesse (le plus rapide se trouve freiné pour travailler à la vitesse du plus lent).

La simplicité de ce bus connu permet de réduire le câblage nécessaire, ce qui augmente la fiabilité et diminue le coût.

Ce bus série, bidirectionnel, comporte deux fils de signal (une ligne de données et une ligne d'horloge) et un fil de masse commune, et son utilisation est généralisée dans l'industrie électronique grand public.

Dans ce cas, la mémoire d'identification 7 est associée à une interface appropriée 14 qui permet au microprocesseur 1 d'accéder à ladite mémoire d'identification 7, à la fois en lecture et en écriture. Le microprocesseur 1 met à jour automatiquement la mémoire 7, lors de son chargement à distance, par l'intermédiaire de cette interface 14.

Selon l'invention, la connexion de l'interface 14 sur le microprocesseur peut être réalisée, de façon connue, de deux manières différentes :
- d'une part, de manière électronique, par l'utilisation d'un composant d'interface entre le bus de communication utilisé et un bus parallèle ; et
- d'autre part, de manière logicielle, en utilisant deux broches d'entrée et de sortie d'un port bidirectionnel du microprocesseur 1 et en réalisant une sérialisation par un logiciel approprié.

En outre, comme lecteur L, on peut utiliser, soit un micro-contrôleur du commerce comportant une interface appropriée, soit un ordinateur personnel du type de poche, auquel on associe une interface adaptée.

Par ailleurs, la connexion entre le lecteur L et le moyen de connexion 10 peut être obtenue par la réalisation d'un contact direct entre une surface de contact 15A d'un élément de connexion 15 qui est relié par une liaison filaire souple 17 au lecteur L et une surface de contact coopérante 10A du moyen de connexion 10.

Plus précisément, un tel contact peut être réalisé par le prolongement d'un circuit imprimé avec des pastilles formées directement sur ledit circuit imprimé.

Ledit moyen de connexion 10 est agencé de préférence sur la face avant de l'équipement E, qui est accessible lors d'un montage, ce qui permet de réaliser la connexion même lorsque l'équipement E est monté sur l'aéronef.

De plus, ledit moyen de connexion 10 peut être protégé par un volet basculant non représenté.

Dans le cadre de la présente invention, la liaison entre le lecteur L et le moyen de connexion 10 peut également être réalisée au moyen d'un système non représenté d'émission et de réception d'ondes électromagnétiques ou optiques. Toutefois, il est alors nécessaire de prévoir une alimentation en électricité sur le dispositif D et le coût de fonctionnement du système S est alors bien plus élevé.

On notera que la connexion précitée doit permettre :
- l'alimentation bifilaire du moyen d'isolation 13 ;
- la transmission des signaux de bus, par exemple les trois signaux du bus "I²C" précités ; et éventuellement
- la transmission d'un signal de retour d'alimentation vers le lecteur L, de manière à mettre ledit lecteur L automatiquement sous tension lors d'une connexion et automatiquement hors tension lors d'une déconnexion.

Par conséquent, grâce à l'invention, la lecture (le défilement sur l'écran 6) des références des sous-ensembles de l'équipement E est réalisée par la simple connexion du lecteur L sur le dispositif D. Il est possible de prévoir un bouton à deux positions (ou deux touches distinctes) pour commander un défilement respectivement dans les deux sens.

En outre, ledit lecteur L peut également être réalisé de manière à mémoriser les références lues et à les restituer ultérieurement, par exemple en connectant ledit lecteur par l'intermédiaire d'un élément de connexion 16 à un poste de traitement non représenté destiné à réaliser divers traitements, comme par exemple la gestion de stocks, ...

On notera que les éléments de connexion 15 et 16 peuvent être regroupés en un seul élément de connexion non représenté.

## Revendications

1. Dispositif d'aide à l'identification pour un équipement (E), l'équipement étant muni d'une unité de stockage (US) stockant des références et susceptible d'être chargée à distance, ledit dispositif (D) comportant :
- une mémoire d'identification (7) reliée à ladite unité de stockage (US) et enregistrant lesdites références, stockées dans ladite unité de stockage (US) ;
- un moyen d'alimentation électrique externe (9) de ladite mémoire d'identification (7) ; et
- un moyen de connexion (10) relié à ladite mémoire d'identification (7), et auquel peut être connecté un lecteur (L) susceptible de lire et restituer les références enregistrées dans ladite mémoire d'identification (7),
**caractérisé en ce que** le dispositif est formé de manière à identifier des sous-ensembles dudit équipement (E), **en ce que** lesdites références concernent lesdits sous-ensembles, et **en ce que** le dispositif comporte de plus un moyen d'isolation (13) destiné :
- d'une part, à isoler électriquement ladite mémoire d'identification (7) desdits sous-ensembles et de ladite unité de stockage (US); et
- d'autre part, à isoler informatiquement ladite mémoire d'identification (7) desdits sous-ensembles et de ladite unité de stockage (US).

2. Dispositif selon la revendication 1,
**caractérisé en ce que** ledit moyen d'isolation (13) est un relais.

3. Dispositif selon la revendication 2,
**caractérisé en ce que** ledit relais (13) est commandé par une source électrique (4) dudit équipement (E).

4. Dispositif selon l'une des revendications 1 à 3,
**caractérisé en ce que** ledit moyen d'alimentation électrique (9) est une liaison électrique susceptible d'être connectée à une source électrique, indépendante dudit dispositif.

5. Dispositif selon l'une des revendications 1 à 4,
**caractérisé en ce que** la liaison (8) entre l'unité de stockage (US) et la mémoire d'identification (7) est destinée à transmettre des signaux de type série, qui sont créés au moyen d'un convertisseur série/parallèle.

6. Dispositif selon l'une des revendications 1 à 4,
**caractérisé en ce que** la liaison (8) entre l'unité de stockage (US) et la mémoire d'identification (7) est destinée à transmettre des signaux de type série, qui sont créés au moyen d'un traitement logiciel interne à l'unité de stockage (US).

7. Dispositif selon l'une quelconque des revendications 1 à 6,
**caractérisé en ce que** ledit moyen de connexion (10) comporte au moins une zone de contact (10A) susceptible d'être mise au contact d'au moins une zone coopérante (15A) du lecteur (L).

8. Système pour identifier des sous-ensembles d'un équipement (E), l'équipement comportant une pluralité de sous-ensembles et étant muni d'une unité de stockage (US) stockant des références desdits sous-ensembles et susceptible d'être chargée à distance,
**caractérisé en ce que** le système comporte :
- un dispositif d'aide à l'identification (D) selon l'une quelconque des revendications 1 à 7, qui est agencé sur ledit équipement (E) ; et
- un lecteur (L) susceptible d'être connecté au moyen de connexion (10) dudit dispositif d'aide à l'identification (D), de lire alors les références enregistrées dans la mémoire d'identification (7) dudit dispositif d'aide à l'identification (D) et de les restituer.

9. Système selon la revendication 8, comportant un dispositif d'aide à l'identification (D) selon la revendication 4,
**caractérisé en ce que** ladite source électrique est incorporée dans ledit lecteur (L).

10. Système selon la revendication 8, comportant un dispositif d'aide à l'identification (D) selon la revendication 7,
**caractérisé en ce que** ledit lecteur (L) comporte au moins une zone de contact (15A) susceptible d'être mise au contact de la zone de contact (10A) dudit moyen de connexion (10).

11. Système selon l'une des revendications 8 à 10,
**caractérisé en ce que** ledit lecteur (L) est susceptible de mémoriser les références lues et de les restituer ultérieurement.

## Patentansprüche

1. Vorrichtung zur Identifikationshilfe für eine Einrichtung (E), wobei die Einrichtung mit einer Speichereinheit (US) versehen ist, welche Kenndaten speichert und aus der Ferne geladen werden kann, wobei die Vorrichtung (D) umfasst:
- einen Identifikationsspeicher (7), der mit der Speichereinheit (US) verbunden ist und die Kenndaten, die in der Speichereinheit (US) gespeichert sind, registriert;
- eine externe Stromversorgungseinrichtung (9) des Identifikationsspeichers (7); und
- eine Anschlusseinrichtung (10), die mit der dem Identifikationsspeicher (7) verbunden ist, und an welcher ein Lesegerät (L) angeschlossen werden kann, das die in dem Identifikationsspeicher (7) registrierten Kenndaten lesen und wiederherstellen kann,
**dadurch gekennzeichnet, dass** die Vorrichtung derart ausgebildet ist, dass sie Untergruppen der Einrichtung (E) identifiziert werden, dass die Kenndaten die Untergruppen betreffen, und dass die Vorrichtung ferner eine Isoliereinrichtung (13) umfasst, die dazu bestimmt ist:
- einerseits den Identifikationsspeicher (7) von den Untergruppen und der Speichereinheit (US) elektrisch zu isolieren; und
- andererseits den Identifikationsspeicher (7) von den Untergruppen und von der Speichereinheit (US) informationstechnisch zu isolieren.

2. Vorrichtung nach Anspruch 1,
**dadurch gekennzeichnet, dass** die Isoliereinrichtung (13) ein Relais ist.

3. Vorrichtung nach Anspruch 2,
**dadurch gekennzeichnet, dass** das Relais (13) durch eine Stromquelle (4) der Einrichtung (E) gesteuert wird.

4. Vorrichtung nach einem der Ansprüche 1 bis 3,
**dadurch gekennzeichnet, dass** die Stromversorgungseinrichtung (9) eine elektrische Verbindung ist, die an eine von der Vorrichtung unabhängige Stromquelle angeschlossen werden kann.

5. Vorrichtung nach einem der Ansprüche 1 bis 4,
**dadurch gekennzeichnet, dass** die Verbindung (8) zwischen der Speichereinheit (US) und dem Identifikationsspeicher (7) dazu bestimmt ist, serielle Signale zu übertragen, die mit Hilfe eines Seriell/Parallel-Umsetzers erzeugt werden.

6. Vorrichtung nach einem der Ansprüche 1 bis 4,
**dadurch gekennzeichnet, dass** die Verbindung (8) zwischen der Speichereinheit (US) und dem Identifikationsspeicher (7) dazu bestimmt ist, serielle Signale zu übertragen, die mit Hilfe einer Softwarebehandlung innerhalb der Speichereinheit (US) erzeugt werden.

7. Vorrichtung nach einem der Ansprüche 1 bis 6,
**dadurch gekennzeichnet, dass** die Anschlusseinrichtung (10) wenigstens eine Kontaktzone (10A) aufweist, welche mit wenigstens einer kooperierenden Zone (15A) des Lesegerätes (L) in Kontakt gebracht werden kann.

8. System zum Identifizieren von Untergruppen einer Einrichtung (E), wobei die Einrichtung eine Mehrzahl von Untergruppen aufweist und mit einer Speichereinheit (US) zu versehen ist, welche Kenndaten der Untergruppen speichert und aus der Feme geladen werden kann,
**dadurch gekennzeichnet, dass** das System umfasst:
- eine Vorrichtung zur Identifikationshilfe (D) gemäß einem der Ansprüche 1 bis 7, die an der Einrichtung (E) angeordnet ist; und
- ein Lesegerät (L), das an die Anschlusseinrichtung (10) der Vorrichtung zur Identifikationshilfe (D) angeschlossen werden kann, um dann die in den Identifikationsspeicher (7) der Vorrichtung zur Identifikationshilfe (D) registrierten Kenndaten zu lesen und diese wieder herzustellen.

9. System nach Anspruch 8 mit einer Vorrichtung zur Identifikationshilfe (D) nach Anspruch 4,
**dadurch gekennzeichnet, dass** die Stromquelle in das Lesegerät (L) eingebaut ist.

10. System nach Anspruch 8, mit einer Vorrichtung zur Identifikationshilfe (D) nach Anspruch 7,
**dadurch gekennzeichnet, dass** das Lesegerät (L) wenigstens eine Kontaktzone (15A) umfasst, die mit der Kontaktzone (10A) der Anschlusseinrichtung (10) in Kontakt gebracht werden kann.

11. System nach einem der Ansprüche 8 bis 10,
**dadurch gekennzeichnet, dass** das Lesegerät (L) die gelesenen Kenndaten speichern und diese später wieder herstellen kann.

## Claims

1. Identification aid device for an item of equipment (E), the item of equipment being equipped with a storage unit (US) storing references and capable of being loaded remotely, said device (D) including:
- an identification memory (7) connected to said storage unit (US) and recording said references, stored in said storage unit (US);
- an external electrical power supply means (9) for said identification memory (7); and
- a connection means (10) connected to said identification memory (7) and to which can be connected a reader (L) capable of reading and telling back the references recorded in said identification memory (7),
**characterized in that** the device is formed in such a way as to identify subassemblies of said item of equipment (E), **in that** said references relate to said subassemblies, and **in that** the device additionally includes an isolation means (13) intended:
- on the one hand, to electrically isolate said identification memory (7) from said subassemblies and from said storage unit (US); and
- on the other hand, to isolate said identification memory (7) in terms of processing software from said subassemblies and from said storage unit (US).

2. Device according to Claim 1,
**characterized in that** said isolation means (13) is a relay.

3. Device according to Claim 2,
**characterized in that** said relay (13) is controlled by an electrical source (4) of said item of equipment (E).

4. Device according to one of Claims 1 to 3,
**characterized in that** said electrical power supply means (9) is an electrical link which can be connected to an electrical source independent of said device.

5. Device according to one of Claims 1 to 4,
**characterized in that** the link (8) between the storage unit (US) and the identification memory (7) is intended to transmit signals of a serial type which are created using a serial/parallel converter.

6. Device according to one of Claims 1 to 4,
**characterized in that** the link (8) between the storage unit (US) and the identification memory (7) is intended to transmit signals of a serial type which are created using software processing within the storage unit (US).

7. Device according to any one of Claims 1 to 6,
**characterized in that** said connection means (10) includes at least one contact zone (10A) capable of being placed in contact with at least one collaborating zone (15A) of the reader (L).

8. System for identifying subassemblies of an item of equipment (E), the equipment including a number of subassemblies and being equipped with a storage unit (US) storing references of said subassemblies and capable of being loaded remotely,
**characterized in that** the system includes:
- an identification aid device (D) according to any one of Claims 1 to 7, which is arranged on said item of equipment (E); and
- a reader (L) which can be connected to the connection means (10) of said identification aid device (D), can then read the references recorded in the identification memory (7) of said identification aid device (D) and tell them back.

9. System according to Claim 8, including an identification aid device (D) according to Claim 4,
**characterized in that** said electrical source is incorporated into said reader (L).

10. System according to Claim 8, including an identification aid device (D) according to Claim 7,
**characterized in that** said reader (L) includes at least one contact zone (15A) which can be placed in contact with the contact zone (10A) of said connection means (10).

11. System according to one of Claims 8 to 10,
**characterized in that** said reader (L) is capable of storing the references read and of telling them back later.
